Europäisches Patentamt

European Patent Office

Office européen des brevets

(19)

(11) Veröffentlichungsnummer: **0 085 317**
**B1**

(12) # EUROPÄISCHE PATENTSCHRIFT

(45) Veröffentlichungstag der Patentschrift:
10.07.85

(51) Int. Cl.⁴: **G 02 B 21/00**, G 02 B 21/24

(21) Anmeldenummer: **83100270.4**

(22) Anmeldetag: **14.01.83**

(54) **Universeller Binokulartubus für Mikroskope.**

(30) Priorität: **30.01.82 DE 3203142**

(43) Veröffentlichungstag der Anmeldung:
**10.08.83 Patentblatt 83/32**

(45) Bekanntmachung des Hinweises auf die Patenterteilung:
**10.07.85 Patentblatt 85/28**

(84) Benannte Vertragsstaaten:
**AT CH DE FR GB LI SE**

(56) Entgegenhaltungen:
**AT - A - 218 272**
**FR - A - 1 075 255**
**GB - A - 1 392 446**
**US - A - 3 421 806**

(73) Patentinhaber: **Firma Carl Zeiss, D-7920 Heidenheim (Brenz) (DE)**

(72) Erfinder: **Weber, Klaus, Dr., Baumgartenweg 22, D-7923 Königsbronn (DE)**

## Beschreibung

Die Erfindung betrifft einen Binokulartubus für Mikroskope mit mindestens zwei Bildeingängen bzw. -ausgängen für Zusatzgeräte und einem schaltbaren Spiegelrevolver, mit dem der Objektivstrahlengang wahlweise direkt oder über ein an den Bildeingang bzw. -ausgang angeschlossenes Zusatzgerät (Umwegschleife) auf die Okulare schaltbar ist.

Derartige Tuben sind beispielsweise aus der DE-PS 24 06 415 bekannt, wobei es sich bei dem Zusatzgerät um einen Photometeraufsatz handelt. Bei eingeschobenem Spiegel (Prisma) wird das gesamte vom Objektiv kommende Licht in die Okulare reflektiert, während bei ausgeschobenem Spiegel das Objekt über einen Bildausgang auf die reflektierende Photometerblende abgebildet und von dieser durch einen zweiten Bildeingang in die Okulare zurückreflektiert wird. In dieser Schaltstellung ist dann das mikroskopische Bild mit dem Bild der Blende überlagert.

Der bekannte Tubus ist nicht ohne weiteres dazu geeignet anstelle der beschriebenen Photometereinrichtung anderer Aufsätze zu tragen.

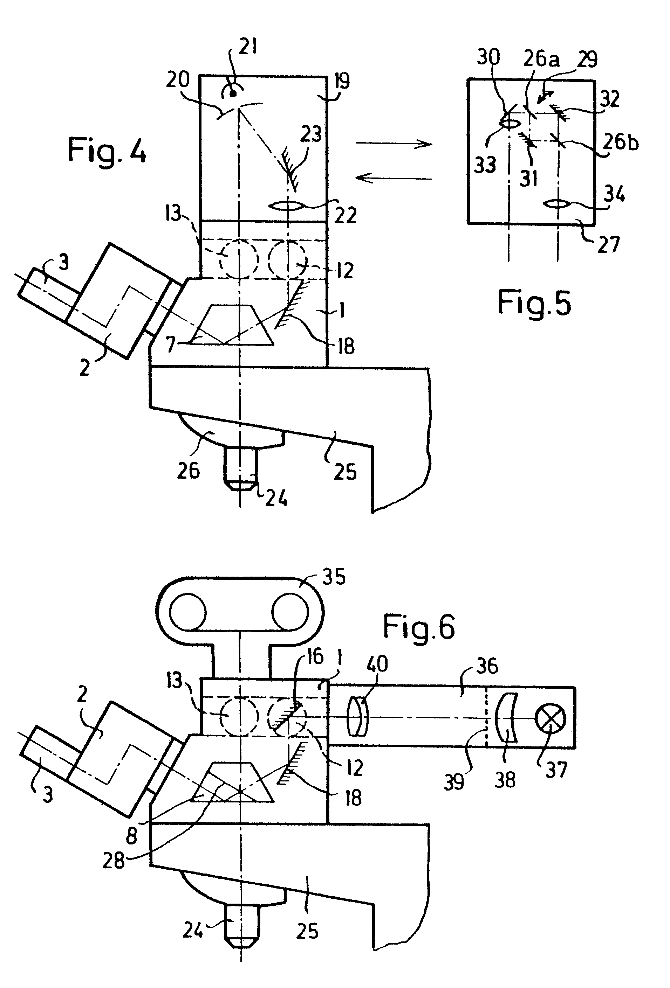

Aus der US-PS 34 21 806 ist ein Photometermikroskop beschrieben, das einen ersten sowohl als Ausgang als auch als Eingang für die Rückspiegelung einer beleuchteten Blende benutzten Strahlzweig und einen weiteren als Ausgang für eine Aufsatzkamera genutzten, zweiten Strahlzweig aufweist (Fig. 5).

Nachteilig an der dort beschriebenen Anordnung der Spiegelelemente ist, daß Licht, welches zum Photometer geleitet wird bzw. über die Blendenrückspiegelung in die Okulare reflektiert wird mehrmals, bis zu fünfmal, Strahlteiler passiert, durch die eine erhebliche Intensitätsminderung erfolgt.

Aus der GB-A-1 392 446 sind spezielle Binokulartuben für Mikroskope zur Beobachtung im Phasen- bzw. Interferenzkontrast bekannt, in denen der Strahlengang über eine Umwegschleife geführt ist, bevor er die Okulare erreicht. In die Rückleitung der Umwegschleife sind verschiedene Prismen einschaltbar, durch die der Strahlengang ganz oder teilweise in Richtung auf einen Kameraausgang ausgespiegelt werden kann.

Dieser Ausgang läßt sich jedoch nicht als Bildeingang z. B. für einen Projektor verwenden, der dem Beobachter Zusatzinformationen darbietet. Außerdem ist es nicht möglich die Umwegschleife mit den Elementen für Phasen- oder Interferenzkontrast gegen weitere Zusatzgeräte wie z. B. eine zweite Kamera etc. auszutauschen.

Es ist die Aufgabe der vorliegenden Erfindung einen Binokulartubus zu schaffen, der zum Ansetzen verschiedenartiger Zusatzgeräte geeignet ist, an den also anstatt eines Photometeraufsatzes beispielsweise ein Photo- bzw. Kamerabaustein und ein Zeichenapparat ansetzbar sind.

Diese Aufgabe wird durch eine Ausbildung des Tubus gemäß den im Kennzeichen des Anspruchs 1 angegebenen Merkmalen gelöst.

In dem erfindungsgemäß aufgebauten Tubus läßt sich der zusätzliche Ausgang ohne großen Aufwand wahlweise für Ausspiegelungen aus dem Ausgang der Umwegleitung als auch für Einspiegelungen in die Rückleitung nutzen während die Ein- bzw. Ausgänge der Umwegleitung zum Ansetzen eines weiteren Zusatzgerätes, beispielsweise einer Kamera, geeignet sind. In zwei Schaltstellungen des ersten Spiegelelementes werden dabei jeweils 100% des zu nutzenden Lichtes in die Zusatzgeräte, z. B. die Kamera oder von den Zusatzgeräten, z. B. von dem Zeichenapparat in die Okulare reflektiert. In der dritten Schaltstellung erfolgt eine Aufteilung des Lichts vom Objektiv zum Okular und zur Kamera bzw. vom Zeichenapparat zum Okular und zur Kamera durch eine einzige Strahlteilerfläche, wodurch das von den Objekten ausgehende Licht also optimal genutzt wird.

Der Spiegelrevolver ist vorteilhaft aus drei verschiedenen Prismen aufgebaut, die jeweils eine Spiegelfläche besitzen, die in allen Schaltstellungen die gleiche Lage einnimmt und zur Einspiegelung des Lichtes in die Okulare dient. Diese Prismen können beispielsweise so aussehen, daß das erste Prisma als doppelt reflektierendes Dreiecksprisma das einfallende Licht zu 100% in die Okulare spiegelt, während das zweite Prisma in der Form eines Trapezprismas das von den Objektiven kommende, senkrecht auf die parallelen Flächen des Prismas auftreffende Licht zu 100% in Richtung des weiteren Ausganges passieren läßt jedoch das senkrecht auf eine der beiden Seitenflächen fallende Licht der Rückleitung der Umwegschleife an der Basisfläche reflektiert und ebenfalls zu 100% in die Okulare einspiegelt. Das dritte Prisma besteht dann aus einem Trapezprisma, das durch eine innere Strahlteilerschicht in ein Dreiecksprisma und ein Ergänzungsteil zerlegt ist, wobei das dreieckige Teilprisma die gleiche Form wie das erste Prisma besitzt.

Das zweite Spiegelelement ist zweckmäßig als Austauschteil ausgebildet und kann wahlweise durch Einschieben in zusätzliche Öffnungen, deren Achsen jeweils durch einen der Schnittpunkte des ersten Bildein- bzw. -ausgangs mit einem der beiden weiteren Aus- bzw. Eingänge verlaufen, in deren Strahlengang eingebracht werden. Dadurch ist die erste Bildöffnung wahlweise als Ausgang oder Eingang verwendbar.

Zweckmäßigerweise sind alle Ein- bzw. Ausgänge mit Führungen für das zweite, austauschbare Spiegelelement versehen, die dessen Stellung festlegen. So können prinzipiell alle Öffnungen als Bildausgänge angewählt werden.

Weitere vorteilhafte Ausgestaltungen finden sich in den Unteransprüchen und werden nachstehend anhand der Fig. 1—6 der Zeichnungen erläutert. Dabei zeigt

Fig. 1 eine perspektivische Darstellung eines erfindungsgemäßen Tubus;

Fig. 2 eine Schnittzeichnung durch die drei Prismen, die mit dem Schieber 5 aus Fig. 1 schaltbar sind;

Fig. 3a eine perspektivische Darstellung eines auswechselbaren, zweiten Spiegelelements für den Tubus aus Fig. 1;

Fig. 3b eine andere Ausführungsform des Spiegelelements aus Fig. 3a;

Fig. 4 eine Prinzipskizze des mit einem Photometeraufsatz versehenen Tubus aus Fig. 1;

Fig. 5 eine Prinzipskizze eines Doppelbildmeßaufsatzes für den Tubus aus Fig. 1;

Fig. 6 eine Prinzipskizze des mit Kameraaufsatz und angesetzter Projektionseinheit versehenen Tubus aus Fig. 1.

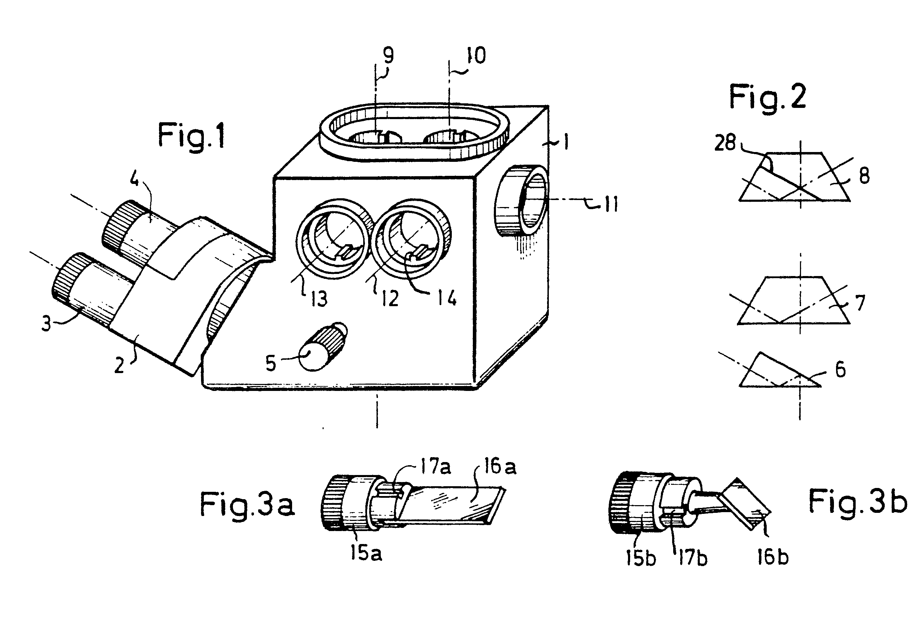

Der in Fig. 1 dargestellte Tubus besteht aus einem im wesentlichen quaderförmigen Gehäuse 1, an dessen abgeschrägte Vorderseite ein Okularträger 2 derart aufgesetzt ist, daß die Okulare 3, 4 etwa einen Winkel von 30° mit der Unterseite des Tubus 1 einschließen, der auf den Objektivträger eines Mikroskops aufzusetzen ist. Der Tubus 1 besitzt acht Öffnungen von denen nur fünf, die Öffnungen 9, 10 an der Oberseite, die Öffnung 11 an der Rückseite sowie die Öffnungen 12 und 13 an der rechten Seite des Tubus zu sehen sind. Nicht dargestellt sind in Verlängerung der Öffnungen 12, 13 zwei weitere Öffnungen auf der linken Seite sowie eine Öffnung auf der Vorderseite des Tubus.

Mit einem Knopf 5 kann ein Schieber betätigt werden, der drei verschiedene Schaltstellungen besitzt, in denen eines der drei in Fig. 2 dargestellten Prismen in den Strahlengang eingeschoben werden kann.

Die Öffnungen 9—13 sind jeweils mit einer Führung 14 für die mit einer Nut 17a bzw. 17b versehenen in Fig. 3 dargestellten Halter 15a bzw. 15b der zweiten Spiegelelemente 16a bzw. 16b ausgestattet.

Wie in Fig. 4 dargestellt kann auf die Oberseite des Tubus 1 ein Photometerbaustein 19 aufgesetzt werden. Dieser besitzt eine Blende in Form einer Öffnung in einem Hohlspiegel 20, hinter dem eine Photozelle 21 angeordnet ist. Das auf dem Spiegel 20 entstehende Zwischenbild, dem die Blendenöffnung überlagert ist, wird über den Spiegel 23 und die Optik 22 sowie den Spiegel 18 im Tubus 1 nach Reflexion an der Basisfläche des Trapezprismas 7 ein weiteres Mal in den Okularen 3, 4 abgebildet. In dieser Konfiguration sind alle Öffnungen bis auf die als Bildausgang dienende Öffnung 9 und die als Bildeingang (Rückleitung) dienende Öffnung 10 (Fig. 1) verschlossen.

Anstelle des Photometerbausteins 19 kann auch ein Doppelbildmeßaufsatz 27 auf den Tubus 1 aufgesetzt werden, der zwei Strahlteiler/Vereiniger 26a und 26b enthält, mit denen der Strahlengang verzweigt wird, sowie zwei Umlenkspiegel 31 und 32, von denen der letztere um eine senkrecht zur Zeichenebene verlaufende Achse um geringe Beträge schwenkbar ist.

Ein Schwenken des Spiegels 32 bewirkt eine Aufspaltung des in den Okularen entstehenden Zwischenbildes für Meßzwecke.

In Fig. 6 trägt der Tubus 1 einen Kameraaufsatz 35, der 70% des von der Strahlteilerfläche 28 in dem Prisma 8 durchgelassenen Lichtes über den Ausgang 9 erhält. 30% des Lichtes gelangen nach Reflexion an der Strahlteilerfläche 28 in die Okulare 3, 4. Nach Einschieben eines der beiden anderen Prismen 7 oder 6 gelangen jeweils 100% des vom Objektiv 24 kommenden Lichtes entweder zur Kamera 35 oder in die Okulare 3, 4.

In die Öffnung 12 ist das in Fig. 3a dargestellte Spiegelelement eingeschoben, dessen Spiegel 16 die Öffnung 11 als zusätzlichen Bildeingang an das optische System des Tubus 1 ankoppelt. An dieser Öffnung 11 ist ein Projektionszusatz 36 angeschlossen, der das Bild der über Lampe 37 und den Kollektor 38 beleuchteten Strichplatte 39 mit Hilfe der Optik 40 den Zwischenbildern in den Okularen 3, 4 und auf der Filmebene der Kamera 35 überlagert. Die Strichplatte kann beispielsweise einen in das Bild zu belichteten Maßstab und eine Formatbegrenzung als Einstellhilfe für den Benutzer tragen.

Es ist ohne weiteres möglich, falls es aus Platz- oder Stabilitätsgründen nötig sein sollte, den Projektionszusatz 36 auf den Tubus 1 an die Öffnung 10 anzusetzen und die Kamera 35 an die hintere Öffnung 11 anzusetzen. In dieser Anordnung ist der Spiegel 16 aus der Öffnung 12 zu entfernen und in die Öffnung 13 einzuschieben oder gegen den Spiegel 16b des in Fig. 3b gezeigten Elementes zu ersetzen, das dann in die Öffnung 9 eingeschoben wird.

Selbstverständlich ist es auch möglich die Kamera 35 oder den Projektionszusatz 36 an eine der seitlichen Öffnungen anzusetzen. In diesem Falle werden zwei der in Fig. 3 dargestellten Spiegelelemente, je eines in die vordere und die hintere Öffnung 11 eingeschoben oder zwei der in Fig. 3b dargestellten Elemente jeweils in die dem angesetzten Zusatzteil gegenüberliegende Öffnung eingeführt.

Setzt man abweichend von der in Fig. 6 skizzierten Konfiguration anstelle des Projektionsaufsatzes 36 eine Fernsehkamera an und benutzt anstelle eines Vollspiegels 16 einen Strahlteiler, der in die Öffnung 13 eingeschoben ist, so lassen sich beide Geräte gleichzeitig am Tubus 1 betreiben.

Die vorstehend beschriebenen Ausführungsbeispiele stellen keine abschließende Aufzählung der Variationsmöglichkeiten des erfindungsgemäßen Binokulartubus dar. Mit dem universellen Tubus lassen sich vielmehr eine Reihe weiterer Konfigurationen realisieren, von deren Darstellung aus Platzgründen abgesehen wird.

## Patentansprüche

1. Binokulartubus für Mikroskope, mit einem ersten schaltbaren Spiegelrevolver (5—8), mit dem der Objektivstrahlengang wahlweise direkt oder über eine zusätzliche Optik in Form einer Umwegschleife auf die Okulare (3, 4) schaltbar ist, und der eine weitere Schaltstellung besitzt, in der ein Spiegelelement (8) als Strahlteiler wirkt; mit einem ersten Bildausgang (11), der über ein zweites in die Rückleitung der Umwegschleife einschaltbares Spiegelelement (15a—17a, 15b—17b) an- bzw. abkoppelbar ist, dadurch gekennzeichnet, daß die Optik der Umwegschleife in an sich bekannter Weise als abnehmbares Zusatzgerät (19, 27) ausgebildet ist, das über einen weiteren Bildausgang (9) und einen Bildeingang (10) an den Tubus (1) anschließbar ist, daß das zweite Spiegelelement wahlweise in einen der beiden Strahlengänge einbringbar ist, der den beiden weiteren Bildausgängen (9) bzw. -eingängen (10) zugeordnet ist, und bei Einschaltung in die Rückleitung der Umwegschleife den dann als Eingang verwendbaren, ersten Bildausgang (11) an die Okulare ankoppelt.

2. Binokulartubus nach Anspruch 1, dadurch gekennzeichnet, daß das erste schaltbare Spiegelelement mindestens zwei verschiedene Prismen (6—8) enthält, die jeweils eine Spiegelfläche besitzen, die in allen Schaltstellungen die gleiche Lage einnimmt.

3. Binokulartubus nach Anspruch 2, dadurch gekennzeichnet, daß im wesentlichen das erste Prisma (6) die Form eines zweifach reflektierenden Dreiecksprismas, das zweite Prisma (7) die Form eines einfach reflektierenden Trapezprismas und das dritte Prisma (8) die Form eines Trapezprismas besitzt, welches durch eine innere Strahlteilerschicht (28) in ein zweifach reflektierendes Dreieckprisma und einfach reflektierendes Ergänzungsprisma geteilt ist.

4. Binokulartubus nach Anspruch 1—3, dadurch gekennzeichnet, daß das zweite Spiegelelement (15a—17a, 15b—17b) als Austauschteil ausgebildet ist.

5. Binokulartubus nach Anspruch 4, dadurch gekennzeichnet, daß die optische Achse des ersten Bildeingangs bzw. -ausgangs (11) die der beiden weiteren Bildeingänge (10) und -ausgänge (9) im rechten Winkel schneidet.

6. Binokulartubus nach Anspruch 5, dadurch gekennzeichnet, daß der Tubus (1) im wesentlichen Quaderform besitzt, auf dessen Frontseite der Okulareinblick schräg eingesetzt ist, daß die zwei weiteren Bildeingänge (10) bzw. -ausgänge (9) an seiner Oberfläche hintereinander angeordnet sind und der erste Bildausgang (11) an der Rückseite des Quaders liegt.

7. Binokulartubus nach Anspruch 6, dadurch gekennzeichnet, daß zusätzliche seitliche Bildeingänge bzw. -ausgänge (12, 13) vorgesehen und derart angeordnet sind, daß ihre Achsen jeweils durch einen der Schnittpunkte der Achse des ersten Bildeingangs bzw. -ausgangs (11) mit einem der beiden weiteren Ein- bzw. Ausgänge (9, 10) verlaufen.

8. Binokulartubus nach Anspruch 7, dadurch gekennzeichnet, daß die Bildeingänge bzw. -ausgänge (9—13) mit Führungen (14) für die austauschbaren Spiegelelemente (15a—17a, 15b—17b) versehen sind.

## Claims

1. Binocular tube for microscopes, comprising a first switchable mirror turret (5—8) by which the path of rays from an objyctive can be switched to the eyepieces (3, 4) optionally either directly or via an auxiliary optics forming a path-folding loop, said mirror turret having another switch position in which a mirror element (8) acts as beamsplitter, said tube comprising a first image outlet (11) which can be coupled or decoupled via a second mirror element (15a—17a) being switchable into bachpassage of the path-folding loop, characterized by the fact that the optics of the path-folding loop is designed in known manner as removable unit, which can be connected to the tube (1) via an additional image outlet (9) and an additional image inlet (10), and that the second mirror element can be inserted optionally in one of two ray paths associated to both additional image outlets oder image inlets respectively, said second mirror element coupling said first image outlet (11) to the eyepieces after insertion into the backpassage of the path-folding loop.

2. Binocular tube as defined in claim 1, characterized by the fact that said first switchable mirror element comprises at least two different prisms (6—8), each of which has a mirror surface which assumes the same position in all switch positions.

4. Binocular tube as defined in claim 2, characterized by the fact that the first prism (6) has substantially the shape of a double-reflecting triangular prism, the second prism (7) has substantially the shape of a single-reflecting trapezoidal prism, and the third prism (8) hat the form of a trapezoidal prism which is divided by an internal beam-splitter layer (28) into substantially a double-reflecting triangular prism and single-reflecting complementary prism.

4. Binocular tube as defined in claims 1—3, characterized by the fact that the second mirror element (15a—17a, 15b—17b) is developed as an interchangeable part.

5. Binocular tube as defined in claim 4, characterized by the fact that the optical axis of the first image inlet or outlet (11) intersects the axes of both additional image inlet-outlets (9, 10) at a right angle.

6. Binocular tube as defined in claim 5, characterized by the fact that the tube (1) is substantially in the shape of a block, on the front side of which the eyepiece viewer is obliquely inserted, and said both further image inlet-outlets (9, 10) are arranged one behind the other on its top surface, and the first image outlet (11) lies on the rear of the block.

7. Binocular tube as defined in claim 6, characterized by the fact that additional lateral image inlet-outets (12, 13) are provided and are so arranged that their axes extend in each case through one of the points of intersection of the axis of the first image outlet (11) with one of said both further inlet-outlets (9, 10).

8. Binocular tube as defined in claim 7, characterized by the fact that said image inlet-outlets (9 - 13) are provided with guides (14) für the interchangeable mirror elements (15a—17a, 15b—17b).

## Revendications

1. Tube binoculaire pour microscope, possédant un premier système de miroirs (5—8) à plusieurs positions, à l'aide duquel les rayons passant par l'objectif peuvent, au choix, être envoyés directement sur les oculaires (3, 4) ou par l'intermédiaire d'une optique supplémentaire se présentant sous la forme d'une boucle de détournement, et qui possède une position supplémentaire dans laquelle un élément de miroir (8) joue le rôle d'un diviseur de faisceau; le tube binoculaire possédant une première sortie d'image (11), qui peut être utilisée ou occultée par un deuxième élément de miroir (15a—17a, 15b—17b) , pouvant être inséré sur le trajet retour de la boucle de détournement, caractérisé en ce que l'optique de la boucle de détournement est constituée, d'une manière connue en soi, d'un appareil additionnel amovible (19, 27), qui peut être raccordé au tube (1) par l'intermédiaire d'une autre sortie d'image (9) et d'une entrée d'image (10); et que le deuxième élément de miroir peut être au chaix inséré dans l'un des deux faisceaux qui sont affectés respectivement à l'autre sortie d'image (9) ou entrée d'image (10), deuxième élément de miroir qui, lors de l'insertion dans le faisceau retour de la boucle de détournement, assure la liaison, aux oculaires, de la première sortie d'image (11) pouvant alors être utilisée comme entrée.

2. Tube binoculaire selon la revendication 1, caractérisé en ce que le premier élément de miroir mobile contient au moins deux prismes différents (6—8) qui possèdent chacun une surface réfléchissante prenant, dans toutes les positions de commutation, la même position.

3. Tube binoculaire selon la revendication 2, caractérisé en ce que le premier prisme (6) a essentiellement la forme d'un prisme triangulaire à double réflexion, le deuxième prisme (7) a la forme d'un prisme trapézoïdal à simple réflexion et le troisième prisme (8) a la forme d'un prisme trapézoïdal qui, grâce à une couche interne diviseuse de faisceau (28), est subdivisé en un prisme triangulaire à double réflexion et en un prisme complémentaire à simple réflexion.

4. Tube binoculaire selon l'une quelconque des revendications 1 à 3, caractérisé en ce que le deuxième élément de miroir (15a—17a, 15b—17b) est conçu comme une pièce amovible.

5. Tube binoculaire selon la revendication 4, caractérisé en ce que l'axe optique de la première entrée ou sortie d'image (11) fait un angle droit avec les deux autres entrées (10) et sorties (9) d'image.

6. Tube binoculaire selon la revendication 5, caractérisé en ce que le tube (1) a essentiellement la forme d'un parallélépipède, sur le côté frontal duquel est installé d'une manière oblique l'ensemble oculaire, et que les deux autres entrées (10) et sorties (9) d'image sont disposées l'une derrière l'autre sur sa surface, la première sortie d'image (11) se trouvant sur le côté arrière du parallélépipède.

7. Tube binoculaire selon la revendication 6, caractérisé en ce qu'il est prévu des entrées et sorties (12, 13) d'images latérales supplémentaires, disposées de façon que leurs axes passent par l'un des points d'intersection de l'axe de la spremière entrée ou sortie d'image (11) et de l'une des deux autres entrées ou sorties (9, 10).

8. Tube binoculaire selon la revendication 7, caractérisé en ce que les entrées et sorties d'image (9—13) sont pourvues de guidages (14) pour les éléments de miroir amovibles (15a—17a, 15b—17b).

Fig.1

Fig.2

Fig.3a

Fig.3b

0 085 317

Fig. 4

Fig. 5

Fig. 6